# EUROPEAN PATENT SPECIFICATION

(11) **EP 3 887 340 B1**
(45) Date of publication and mention of the grant of the patent: **10.04.2024**
(21) Application number: 19804723.5
(22) Date of filing: 18.11.2019
(51) Int. Cl.: C05C 1/00, C05C 3/00, C05G 3/20, C05G 3/30, C05G 3/90, C05G 5/30

(54) **A MIXTURE COMPRISING A NITROGEN-CONTAINING FERTILIZER, A NITRIFICATION INHIBITOR AND A COMPOSITION COMPRISING PRIMARY AND/OR SECONDARY ALKYL AND/OR ALKYLENE MONOAMINES**
GEMISCH MIT EINEM STICKSTOFFHALTIGEN DÜNGEMITTEL, EINEM NITRIFIKATIONSINHIBITOR UND EINER ZUSAMMENSETZUNG MIT PRIMÄREN UND / ODER SEKUNDÄREN ALKYL- UND/ODER ALKYLENMONOAMINEN
MÉLANGE COMPRENANT UN ENGRAIS CONTENANT DE L'AZOTE, UN INHIBITEUR DE NITRIFICATION ET UNE COMPOSITION COMPRENANT DES ALKYLMONOAMINES ET/OU DES ALKYLÈNEMONOAMINES PRIMAIRES ET/OU SECONDAIRES

(30) Priority: 29.11.2018 EP 18209232
(43) Date of publication of application: 06.10.2021
(73) Proprietor: BASF SE, 67056 Ludwigshafen am Rhein (DE)
(72) Inventor: STAAL, Maarten, 67117 Limburgerhof (DE); THIEL, Uwe, 67117 Limburgerhof (DE); NETT, Florian, 67117 Limburgerhof (DE); SCHMID, Markus, 67117 Limburgerhof (DE); SCHNEIDER, Karl-Heinrich, 67117 Limburgerhof (DE)
(74) Representative: BASF IP Association
(86) International application number: PCT/EP2019/081590
(87) International publication number: WO 2020/109044

(56) References cited:
- EP-A1- 0 025 780
- EP-A1- 3 109 223
- DE-A1- 2 058 944
- US-A- 3 250 607
- US-A1- 2012 252 668

## Description

The present invention relates to a mixture comprising a nitrogen-containing fertilizer, a nitrification inhibitor and a composition comprising primary and/or secondary alkyl and/or alkylene monoamines, a method of obtaining such a mixture, as well as the use of a composition comprising primary and/or secondary alkyl and/or alkylene monoamines for the anti-caking or dust-preventing treatment of a fertilizer mixture comprising a nitrogen-containing fertilizer and a nitrification inhibitor.

Nitrogen is an essential element for plant growth and reproduction. About 25% of the plant-available nitrogen in soils (ammonium and nitrate) originates from decomposition processes (mineralization) of organic nitrogen compounds such as humus, plant and animal residues and organic fertilizers. Approximately 5% derive from rainfall. On a global basis, the biggest part (70%), however, are supplied to the plant by inorganic nitrogen fertilizers. Without the use of nitrogen fertilizers, the earth would not be able to support its current population.

Soil microorganisms convert organic nitrogen to ammonium (NH₄⁺) which is subsequently oxidized to nitrate (NO₃⁻) in a process known as nitrification. Albeit very important for agriculture, nitrate is highly mobile in the soil and may be readily lost from soils by leaching to ground water. Nitrogen is further lost by microbiological denitrification to gaseous forms of nitrogen. As a result of the various losses, approximately 50% of the applied nitrogen is lost during the year following fertilizer addition (cf. Nelson and Huber; Nitrification inhibitors for corn production (2001), National Corn Handbook, Iowa State University).

Nitrification inhibitors such as pyrazole compounds can be used in order to reduce nitrification and consequently increase fertilization efficacy and decrease nitrogen levels in the groundwater and surface waters and nitrogen oxide levels in the atmosphere. A problem associated with the use of pyrazole compounds is their volatility, which results in losses of the nitrification inhibitor during storage. In order to address this problem, addition salts of pyrazoles as well as pyrazole derivatives with hydrophilic groups have been described in the prior art.

EP 1120388 B1 and EP 0917526 B1 discloses the use of a phosphoric acid addition salt or a poly acid addition salt of 3,4-dimethyl pyrazole as nitrification inhibitor.

WO 96/24566 describes methods of producing low-volatile pyrazole derivatives with hydrophilic groups such as 2-(3-methyl-1H-pyrazole-1-yl) succinic acid to be used as nitrification inhibitors.

WO 2011/032904 and WO 2013/121384 describe 2-(3,4-dimethyl-1H-pyrazole-1-yl) succinic acid as nitrification inhibitor.

It is known that most fertilizers, for example but not limited to ammonium nitrate-based, urea-based NPK fertilizers, have a certain degree of tendency to form agglomerates during the storage process. This phenomenon, also referred to as caking, is described for example in D.W. Rutland, "Fertilizer caking: mechanisms, influential factors, and methods of prevention", Fertilizer Research 30: 99-114, 1991.

DE 1592572 discloses the use of polyethylene wax as coating agent for granulated or crystalline fertilizers to prevent the caking of the fertilizers.

EP 0908433 A1 discloses compositions for the anticaking and dust-preventing treatment of agricultural ammonium nitrates composed a mixture of primary and secondary alkyl and/or alkylene monoamines, of aluminium stearate, of fatty alcohol. EP 3109223 discloses a composition comprising DMPSA1 and an amine for treating fertilizers comprising urea.

Therefore, it was an object of the present invention to provide a specific mixture comprising fertilizer and nitrification inhibitors in which the formation of agglomerates (caking) can be prevented during the storage process. This mixture is referred to as mixture (Q) in the following. Furthermore, it was an object of the present invention to provide a mixture comprising fertilizer and nitrification inhibitors, which has at least one of the following features:
(i) enabling simple handling and application of the mixture (Q),
(ii) improved physical and/or chemical and/or other stability of the mixture (Q) during the storage process, e.g. over 1, 2, 3, 4, 5, 6, 7, 8, 9, 10, 11, 12, 13, 14, 15, 16, 17, 18, 19, 20 or more weeks.
(iii) be easily and safely packaged, transported and shipped, even in large quantities,
(iv) providing a mixture (Q) which can be easily and safely packaged, transported and shipped, even in large quantities,
(v) providing a mixture (Q) which can be easily and safely handled and applied for soil treatment, even in large quantities, and/or
(vi) proving a ready-to-use mixture (Q),
(vii) reducing the emission of nitrous oxide from soils, and/or
(viii) reducing the ammonia emission from soils, and/or
(ix) reducing nitrate leaching, and/or
(x) toxicologically unobjectionable.

The preferred objects of the present invention are (i), (ii), (iii), (iv), (v), (vi), and/or (x), the more preferred objects of the present invention are (i), (ii), (ii), (iv), the most preferred objects of the present invention are (i), (ii), the particularly preferred object of the present invention is (ii).

In view of the above objects, the present invention relates to a mixture comprising
a) at least one nitrogen-containing fertilizer (A), and
b) at least one nitrification inhibitor (B) selected from the group consisting of 3,4-dimethyl-1*H*-pyrazole (DMP), 3,4-dimethyl-1*H*-pyrazole phosphate (DMPP), 2-(3,4-dimethyl-1*H-*pyrazol-1-yl)succinic acid (DMPSA1), 2-(4,5-dimethyl-1*H*-pyrazol-1-yl)succinic acid (DMPSA2), and salts thereof, and
c) a composition (C) comprising primary and/or secondary alkyl and/or alkylene monoamines. and further 2 to 8 wt.-% of aluminium stearate, based on the total weight of composition (C), and/or 2 to 8 wt.-% fatty alcohol based on the total weight of composition (C).

Furthermore, the present invention relates to a method of obtaining the above-mentioned mixture, wherein the fertilizer mixture comprising
a) at least one nitrogen-containing fertilizer (A), and
b) at least one nitrification inhibitor (B) selected from the group consisting of 3,4-dimethyl-1*H*-pyrazole (DMP), 3,4-dimethyl-1*H*-pyrazole phosphate (DMPP), 2-(3,4-dimethyl-1*H-*pyrazol-1-yl)succinic acid (DMPSA1), 2-(4,5-dimethyl-1*H*-pyrazol-1-yl)succinic acid (DMPSA2), and salts thereof,
is treated with a composition (C) comprising primary and/or secondary alkyl and/or alkylene monoamines and further 2 to 8 wt.-% of aluminium stearate, based on the total weight of composition (C), and/or 2 to 8 wt.-% fatty alcohol based on the total weight of composition (C), in the proportion of 0.1 kg per ton to 5 kg per ton.

Furthermore, the present invention relates to the use of a composition (C) comprising primary and/or secondary alkyl and/or alkylene monoamines and further 2 to 8 wt.-% of aluminium stearate, based on the total weight of composition (C), and/or 2 to 8 wt.-% fatty alcohol based on the total weight of composition (C), for the anti-caking or dust-preventing treatment of a fertilizer mixture comprising
a) at least one nitrogen-containing fertilizer (A), and
b) at least one nitrification inhibitor (B) selected from the group consisting of 3,4-dimethyl-1*H*-pyrazole (DMP), 3,4-dimethyl-1*H*-pyrazole phosphate (DMPP), 2-(3,4-dimethyl-1*H*-pyrazol-1-yl)succinic acid (DMPSA1), 2-(4,5-dimethyl-1*H*-pyrazol-1-yl)succinic acid (DMPSA2), and salts thereof.

In the present patent application, 3,4-dimethyl-1*H*-pyrazole is referred to as "DMP", 3,4-dimethyl-1H-pyrazole phosphate is referred to as "DMPP", 2-(3,4-dimethyl-1*H*-pyrazol-1-yl)succinic acid is referred to as "DMPSA1", 2-(4,5-dimethyl-1*H*-pyrazol-1-yl)succinic acid is referred to as "DMPSA2", "DMPSA1" and/or "DMPSA2" is referred to as "DMPSA", weight percent is referred to as "wt%". "Per ton" is referred to as "per ton of nitrogen-containing fertilizer (A)", if not specified otherwise.

In a preferred embodiment, the nitrogen-containing fertilizer (A) is an ammonium-containing fertilizer.

In another preferred embodiment, the nitrogen-containing fertilizer (A) is selected from the group consisting of ammonium nitrate, calcium ammonium nitrate, ammonium sulfate, ammonium chloride, ammonium carbonate, ammonium sulfate nitrate, diammonium phosphate, monoammonium phosphate, ammonium thiosulfate, urea, and NPK fertilizer. In another preferred embodiment, the nitrogen-containing fertilizer (A) is ammonium sulfate, or ammonium sulfate nitrate. In another preferred embodiment, the nitrogen-containing fertilizer (A) is ammonium sulfate nitrate.

In another preferred embodiment, the nitrification inhibitor (B) is 3,4-dimethyl-1*H*-pyrazole phosphate (DMPP). In another preferred embodiment, the nitrification inhibitor (B) is 3,4-dimethyl-1*H-*pyrazole (DMP). In another preferred embodiment, the nitrification inhibitor (B) 2-(3,4-dimethyl-1H-pyrazol-1-yl)succinic acid (DMPSA1), and/or 2-(4,5-dimethyl-1H-pyrazol-1-yl)succinic acid (DMPSA2), and/or salts thereof, preferably ammonium or potassium salts of DMPSA1 and/or DMPSA2.

The nitrification inhibitor can be present in any form, for example in solid form, in crystalline form, powder form, liquid form, formulated form (formulation), or liquid solution form.

The composition (C) comprises 1 to 40 wt.-% of an amine mixture of primary and/or secondary alkyl and/or alkylene monoamines based on the total weight of composition (C).

In a preferred embodiment, the amount of the amine mixture of primary and/or secondary alkyl and/or alkylene monoamines within the composition (C) is preferably not less than 2 wt.-%, more preferably not less than 4 wt.-%, most preferably not less than 6 wt.-%, particularly preferably not less than 8 wt.-%, particularly more preferably not less than 10 wt.-%, particularly most preferably not less than 12 wt.-%, particularly not less than 14 wt.-% based on the total weight of the composition (C). In another preferred embodiment, the amount of the amine mixture of primary and/or secondary alkyl and/or alkylene monoamines within the composition (C) is preferably not more than 37 wt.-%, more preferably not more than 34 wt.-%, most preferably not more than 31 wt.-%, particularly preferably not more than 28 wt.-%, particularly more preferably not more than 25 wt.-%, particularly most preferably not more than 22 wt.-%, particularly not more than 19 wt.-% based on the total weight of the composition (C).

In a preferred embodiment, the amount of the amine mixture of primary and/or secondary alkyl and/or alkylene monoamines within the composition (C) is from 10wt.% to 25 wt.% based on the total weight of the composition (C).

In a preferred embodiment, the composition (C) comprises 1 to 40 wt.-% of an amine mixture of primary and/or secondary alkyl and/or alkylene monoamines based on the total weight of composition (C), wherein the ratio of secondary alkyl and/or alkylene monoamines is from 25 to 75 wt.-%, preferably from 30 to 70 wt.-%, more preferably from 35 to 65 wt.-%, most preferably from 40 to 60 wt.-%, particularly preferably from 45 to 55 wt.-% based on the total weight of alkyl and/or alkylene monoamines.

In another preferred embodiment, the composition (C) comprises primary and/or secondary alkyl and/or alkylene monoamines which are amines having alkyl and/or alkylene chains containing a number of carbons from 6 to 40, more preferably from 8 to 35, most preferably from 10 to 30, particularly preferably from 12 to 25, particularly from 14 to 20.

In another preferred embodiment, the composition (C) comprises hydrogenated tallow amines as primary and/or secondary alkyl and/or alkylene monoamines.

In another preferred embodiment, the composition (C) comprises 1-aminohexadecane, 1-aminoheptadecane, 1-aminooctadecane (stearyl amine), and/or *N*-hexadecyl-*N*-octadecylamine and/or their corresponding ammonium (NH₄⁺) forms as primary and/or secondary alkyl and/or alkylene monoamines.

In the present patent application, the corresponding ammonium (NH₄⁺) forms of the amines are also included in the term "primary and/or secondary alkyl and/or alkylene monoamines".

In one preferred embodiment, the composition (C) optionally further comprises 1 to 40 wt.-% of fatty acids based on the total weight of composition (C).

In a preferred embodiment, the amount of the fatty acid within the composition (C) is preferably not less than 2 wt.-%, more preferably not less than 4 wt.-%, most preferably not less than 6 wt.-%, particularly preferably not less than 8 wt.-%, particularly more preferably not less than 10 wt.-%, particularly most preferably not less than 12 wt.-%, particularly not less than 14 wt.-% based on the total weight of the composition (C). In another preferred embodiment, the amount of the fatty acid within the composition (C) is preferably not more than 37 wt.-%, more preferably not more than 34 wt.-%, most preferably not more than 31 wt.-%, particularly preferably not more than 28 wt.-%, particularly more preferably not more than 25 wt.-%, particularly most preferably not more than 22 wt.-%, particularly not more than 19 wt.-% based on the total weight of the composition (C).

In a preferred embodiment, the amount of the fatty acid within the composition (C) is from 10wt.% to 25 wt.% based on the total weight of the composition (C).

In another preferred embodiment, the composition (C) optionally further fatty acids having alkyl and/or alkylene chains containing a number of carbons from 6 to 40, more preferably from 8 to 35, most preferably from 10 to 30, particularly preferably from 12 to 25, particularly from 14 to 20, for instance from 14 to 18, for example from 16 to 18.

In another preferred embodiment, the composition (C) comprises tetradecanoic acid (myristic acid), pentadecanoic acid, hexadecanoic acid (palmitic acid), heptadecanoic acid (margaric acid), and/or octadecanoic acid (stearic acid), and/or their corresponding carboxylate (COO⁻) forms as fatty acids.

In the present patent application, the corresponding carboxylate (COO⁻) forms of the acids are also included in the term "fatty acid".

In another preferred embodiment, the composition (C) comprises a mixture of
(Ci) primary and/or secondary alkyl and/or alkylene monoamines (referred to as "(C1)" in the following), and
(Cii) fatty acids (refered to as "(C2)" in the following).

In another preferred embodiment, the composition (C) comprises a mixture of
(Ci) primary and/or secondary alkyl and/or alkylene monoamines which are amines having alkyl and/or alkylene chains containing a number of carbons from 6 to 40, more preferably from 8 to 35, most preferably from 10 to 30, particularly preferably from 12 to 25, particularly from 14 to 20, and
(Cii) fatty acids having alkyl and/or alkylene chains containing a number of carbons from 6 to 40, more preferably from 8 to 35, most preferably from 10 to 30, particularly preferably from 12 to 25, particularly from 14 to 20, for instance from 14 to 18, for example from 16 to 18.

In another preferred embodiment, the composition (C) comprises a mixture of
(Ci) 1-aminohexadecane, 1-aminoheptadecane, 1-aminooctadecane (stearyl amine), and/or *N-*hexadecyl-*N*-octadecylamine, and
(Cii) tetradecanoic acid (myristic acid), pentadecanoic acid, hexadecanoic acid (palmitic acid), heptadecanoic acid (margaric acid), and/or octadecanoic acid (stearic acid).

The mixture of
(Ci) primary and/or secondary alkyl and/or alkylene monoamines, and
(Cii) fatty acids
can be either a reaction mixture, a physical mixture, or a salt.

In another preferred embodiment, the composition (C) comprises a mixture of (C1) and (C2), wherein the molar ratio of (C1) to (C2) is preferably in the range of 100:1 to 1:100, more preferably in the range of 40:1 to 1:40, most preferably in the range of 20:1 to 1:20, particularly preferably in the range of 10:1 to 1:10, particularly more preferably in the range of 5:1 to 1:5, particularly most preferably in the range of 3:1 to 1:3, particularly in the range of 2:1 to 1:2, for instance preferably in the range of 1.5:1 to 1:1.5, for instance more preferably in the range of 1.2:1 to 1:1.2, for example 1:1.

In another preferred embodiment, the composition (C) comprises a mixture of (C1) and (C2), wherein the weight ratio of (C1) to (C2) is preferably in the range of 100:1 to 1:100, more preferably in the range of 40:1 to 1:40, most preferably in the range of 20:1 to 1:20, particularly preferably in the range of 10:1 to 1:10, particularly more preferably in the range of 5:1 to 1:5, particularly most preferably in the range of 3:1 to 1:3, particularly in the range of 2:1 to 1:2, for instance preferably in the range of 1.5:1 to 1:1.5, for instance more preferably in the range of 1.2:1 to 1:1.2, for example 1:1.

The composition (C) further comprises 2 to 8 wt.-% of aluminium stearate, based on the total weight of composition (C), and/or 2 to 8 wt.-% of fatty alcohol based on the total weight of composition (C).

In another preferred embodiment, the composition (C) may optionally comprise as fatty alcohol an alcohol having an alkyl and/or alkylene chain containing from 10 to 24 carbon atoms, for example octadecyl alcohol (stearyl alcohol), arachidic alcohol or behenic alcohol. In another preferred embodiment, the composition (C) may optionally comprise as fatty alcohol octadecyl alcohol. In another preferred embodiment, the composition (C) may optionally comprises 2 to 8 wt.-% fatty alcohol based on the total weight of composition (C), wherein the fatty alcohol is octadecyl alcohol.

The remaining part of the compositon (C) which is neither a alkyl and/or alkylene monoamines, nor aluminium stearate, nor a fatty alcohol, can be normal fillers, oily or waxy ingredients well-known to the persons skilled in the art, for example waxes such as paraffin or petroleum waxes.

In another preferred embodiment, the composition (C) may optionally further comprise a wax, preferably paraffin or petroleum wax, more preferably paraffin wax.

For example, the composition (C) can be prepared very simply by dissolving or dispersing their various components in an oily ingredient, proceeding with heat to 80° C. and stirring until a homogeneous composition is obtained. If these compositions are cold, they are in general in a pasty appearance. They can be applied in the molten state, by spraying at temperatures around 80 ° C., to the fertilizer to be treated which has been previously loaded at room temperature in a rotary drum. The spraying is preferably carried out by an air spraying system. The residence time of the fertilizer in the coating drum is extended for a further minute for better homogenization of the coating. The quantities deposited are generally between 0.1 kg / t and 5 kg / t of fertilizer. These are conditions which are known to persons skilled in the art.

According to one embodiment of the present invention, the above-specified mixture according to the present invention can be obtained in a way wherein the fertilizer mixture comprising
a) at least one nitrogen-containing fertilizer (A), and
b) at least one nitrification inhibitor (B) selected from the group consisting of 3,4-dimethyl-1*H*-pyrazole (DMP), 3,4-dimethyl-1*H*-pyrazole phosphate (DMPP), 2-(3,4-dimethyl-1*H-*pyrazol-1-yl)succinic acid (DMPSA1), 2-(4,5-dimethyl-1*H*-pyrazol-1-yl)succinic acid (DMPSA2), and salts thereof,

is treated with a composition (C) comprising primary and/or secondary alkyl and/or alkylene monoamines and further 2 to 8 wt.-% of aluminium stearate, based on the total weight of composition (C), and/or 2 to 8 wt.-% fatty alcohol based on the total weight of composition (C),
in the proportion of 0.1 kg per ton to 5 kg per ton, preferably in the proportion of 0.5 kg per ton to 4 kg per ton, more preferably in the proportion of 1.0 kg per ton to 3.0 kg per ton.

According to another embodiment of the present invention, the above-specified mixture according to the present invention can be obtained in a way wherein
(i) the at least one nitrogen-containing fertilizer (A) is first treated with the at least one nitrification inhibitor (B) selected from the group consisting of 3,4-dimethyl-1*H*-pyrazole (DMP), 3,4-dimethyl-1*H*-pyrazole phosphate (DMPP), 2-(3,4-dimethyl-1*H*-pyrazol-1-yl)succinic acid (DMPSA1), 2-(4,5-dimethyl-1*H*-pyrazol-1-yl)succinic acid (DMPSA2), and salts thereof, and
(ii) the mixture obtained in step (i) is then treated with a composition (C) comprising primary
   and/or secondary alkyl and/or alkylene monoamines and further 2 to 8 wt.-% of aluminium stearate, based on the total weight of composition (C), and/or 2 to 8 wt.-% fatty alcohol based on the total weight of composition (C), in the proportion of 0.1 kg per
   ton to 5 kg per ton, preferably in the proportion of 0,5 kg per ton to 4 kg per ton, more preferably in the proportion of 1.0 kg per ton to 3.0 kg per ton.

According to another embodiment of the present invention, the above-specified mixture according to the present invention can be obtained in a way wherein
(i) the at least one nitrogen-containing fertilizer (A) is first treated with a composition (C) comprising primary and/or secondary alkyl and/or alkylene monoamines and further 2 to 8 wt.-% of aluminium stearate, based on the total weight of composition (C), and/or 2 to 8 wt.-% fatty alcohol based on the total weight of composition (C), in the proportion of 0.1 kg per ton to 5 kg per ton, preferably in the proportion of 0,5 kg per ton to 4 kg per ton, more preferably in the proportion of 1.0 kg per ton to 3.0 kg per ton.
(ii) the mixture obtained in step (i) is then treated with the at least one nitrification inhibitor (B) selected from the group consisting of 3,4-dimethyl-1*H*-pyrazole (DMP), 3,4-dimethyl-1*H*-pyrazole phosphate (DMPP), 2-(3,4-dimethyl-1*H*-pyrazol-1-yl)succinic acid (DMPSA1), 2-(4,5-dimethyl-1*H*-pyrazol-1-yl)succinic acid (DMPSA2), and salts thereof.

According to another embodiment of the present invention, the above-specified mixture according to the present invention can be obtained in a way wherein
(i) the at least one nitrification inhibitor (B) selected from the group consisting of 3,4-dimethyl-1H-pyrazole (DMP), 3,4-dimethyl-1H-pyrazole phosphate (DMPP), 2-(3,4-dimethyl-1H-pyrazol-1-yl)succinic acid (DMPSA1), 2-(4,5-dimethyl-1H-pyrazol-1-yl)succinic acid (DMPSA2), and salts thereof (A) is first mixed or treated with a composition (C) comprising primary and/or secondary alkyl and/or alkylene monoamines, and further 2 to 8 wt.-% of aluminium stearate, based on the total weight of composition (C), and/or 2 to 8 wt.-% fatty alcohol based on the total weight of composition (C),
(ii) the at least one nitrogen-containing fertilizer (A) is then treated with the mixture obtained in step (i) in the proportion of 0.1 kg of the mixture [obtained in step (i)] per ton (of fertilizer) to 5 kg per ton, preferably in the proportion of 0.5 kg per ton to 4 kg per ton, more preferably in the proportion of 1.0 kg per ton to 3.0 kg per ton.

In general, The term "fertilizers" is to be understood as chemical compounds applied to promote plant and fruit growth. Fertilizers are typically applied either through the soil (for uptake by plant roots), through soil substituents (also for uptake by plant roots), or by foliar feeding (for uptake through leaves). The term also includes mixtures of one or more different types of fertilizers as mentioned below.

The term "fertilizers" can be subdivided into several categories including: a) organic fertilizers (composed of plant/animal matter), b) inorganic fertilizers (composed of chemicals and minerals) and c) urea-containing fertilizers.

Organic fertilizers include manure, e.g. liquid manure, semi-liquid manure, biogas manure, stable manure or straw manure, slurry, liquid dunqwater, sewage sludge, worm castings, peat, seaweed, compost, sewage, and guano. Green manure crops (cover crops) are also regularly grown to add nutrients (especially nitrogen) to the soil. Manufactured organic fertilizers include e.g. compost, blood meal, bone meal and seaweed extracts. Further examples are enzyme digested proteins, fish meal, and feather meal. The decomposing crop residue from prior years is another source of fertility.

Inorganic fertilizers are usually manufactured through chemical processes (such as e.g. the Haber-Bosch process), also using naturally occurring deposits, while chemically altering them (e.g. concentrated triple superphosphate). Naturally occurring inorganic fertilizers include Chilean sodium nitrate, mine rock phosphate, limestone, sulfate of potash, muriate of potash, and raw potash fertilizers.

Typical solid fertilizers are in a crystalline, prilled or granulated form. Typical nitrogen containing inorganic fertilizers are ammonium nitrate, calcium ammonium nitrate, ammonium sulfate, ammonium sulfate nitrate, calcium nitrate, diammonium phosphate, monoammonium phosphate, ammonium thio sulfate and calcium cyanamide.

The inorganic fertilizer may be an NPK fertilizer. "NPK fertilizers" are inorganic fertilizers formulated in appropriate concentrations and combinations comprising the three main nutrients nitrogen (N), phosphorus (P) and potassium (K) as well as typically S, Mg, Ca, and trace elements. "NK fertilizers" comprise the two main nutrients nitrogen (N) and potassium (K) as well as typically S, Mg, Ca, and trace elements. "NP fertilizers" comprise the two main nutrients nitrogen (N) and phosphorus (P) as well as typically S, Mg, Ca, and trace elements.

Urea-containing fertilizer may, in specific embodiments, be formaldehyde urea, UAN, urea sulfur, stabilized urea, urea based NPK-fertilizers, or urea ammonium sulfate. Also envisaged is the use of urea as fertilizer. In case urea-containing fertilizers or urea are used or provided, it is particularly preferred that urease inhibitors as defined herein above may be added or additionally be present, or be used at the same time or in connection with the urea-containing fertilizers.

Fertilizers may be provided in any suitable form, e.g. as coated or uncoated granules, in liquid or semi-liquid form, as sprayable fertilizer, or via fertigation etc.

Coated fertilizers may be provided with a wide range of materials. Coatings may, for example, be applied to granular or prilled nitrogen (N) fertilizer or to multi-nutrient fertilizers. Typically, urea is used as base material for most coated fertilizers. The present invention, however, also envisages the use of other base materials for coated fertilizers, any one of the fertilizer materials defined herein. In certain embodiments, elemental sulfur may be used as fertilizer coating. The coating may be performed by spraying molten S over urea granules, followed by an application of sealant wax to close fissures in the coating. In a further embodiment, the S layer may be covered with a layer of organic polymers, preferably a thin layer of organic polymers. In another embodiment, the coated fertilizers are preferably physical mixtures of coated and non-coated fertilizers.

Further envisaged coated fertilizers may be provided by reacting resin-based polymers on the surface of the fertilizer granule. A further example of providing coated fertilizers includes the use of low permeability polyethylene polymers in combination with high permeability coatings.

In specific embodiments the composition and/or thickness of the fertilizer coating may be adjusted to control, for example, the nutrient release rate for specific applications. The duration of nutrient release from specific fertilizers may vary, e.g. from several weeks to many months. The presence of at least two nitrification inhibitors (compound I and compound II) in a mixture with coated fertilizers may accordingly be adapted. It is, in particular, envisaged that the nutrient release involves or is accompanied by the release of at least two nitrification inhibitors (compound I and compound II) according to the present invention.

Coated fertilizers may be provided as controlled release fertilizers (CRFs). In specific embodiments these controlled release fertilizers are fully coated NPK fertilizers, which are homogeneous and which typically show a pre-defined longevity of release. In further embodiments, the CRFs may be provided as blended controlled release fertilizer products which may contain coated, uncoated and/or slow release components. In certain embodiments, these coated fertilizers may additionally comprise micronutrients. In specific embodiments these fertilizers may show a pre-defined longevity, e.g. in case of NPK fertilizers.

Additionally, envisaged examples of CRFs include patterned release fertilizers. These fertilizers typically show a pre-defined release patterns (e.g. hi/standard/lo) and a pre-defined longevity. In exemplary embodiments fully coated NPK, Mg and micronutrients may be delivered in a patterned release manner.

Also envisaged are double coating approaches or **coated fertilizers** based on a programmed release.

In further embodiments the fertilizer may be provided as, or may comprise or contain a slow release fertilizer. The fertilizer may, for example, be released over any suitable period of time, e.g. over a period of 1 to 5 months, preferably up to 3 months. Typical examples of ingredients of slow release fertilizers are IBDU (isobutylidenediurea), e.g. containing about 31-32 % nitrogen, of which 90% is water insoluble; or UF, i.e. an urea-formaldehyde product which contains about 38 % nitrogen of which about 70 % may be provided as water insoluble nitrogen; or CDU (crotonylidene diurea) containing about 32 % nitrogen; or MU (methylene urea) containing about 38 to 40% nitrogen, of which 25-60 % is typically cold water insoluble nitrogen; or MDU (methylene diurea) containing about 40% nitrogen, of which less than 25 % is cold water insoluble nitrogen; or MO (methylol urea) containing about 30% nitrogen, which may typically be used in solutions; or DMTU (diimethylene triurea) containing about 40% nitrogen, of which less than 25% is cold water insoluble nitrogen; or TMTU (tri methylene tetraurea), which may be provided as component of UF products; or TMPU (tri methylene pentaurea), which may also be provided as component of UF products; or UT (urea triazone solution) which typically contains about 28 % nitrogen. The fertilizer mixture may also be long-term nitrogen-bearing fertiliser containing a mixture of acetylene diurea and at least one other organic nitrogen-bearing fertiliser selected from methylene urea, isobutylidene diurea, crotonylidene diurea, substituted triazones, triuret or mixtures thereof.

Any of the above mentioned fertilizers or fertilizer forms may suitably be combined. For instance, slow release fertilizers may be provided as coated fertilizers. They may also be combined with other fertilizers or fertilizer types.

The term "fertigation" as used herein refers to the application of fertilizers, optionally soil amendments, and optionally other water-soluble products together with water through an irrigation system to a plant or to the locus where a plant is growing or is intended to grow, or to a soil substituent as defined herein below. For example, liquid fertilizers or dissolved fertilizers may be provided via fertigation directly to a plant or a locus where a plant is growing or is intended to grow. Likewise, nitrification inhibitors according to the present invention, or in combination with additional nitrification inhibitors, may be provided via fertigation to plants or to a locus where a plant is growing or is intended to grow. Fertilizers and nitrification inhibitors according to the present invention, or in combination with additional nitrification inhibitors, may be provided together, e.g. dissolved in the same charge or load of material (typically water) to be irrigated. In further embodiments, fertilizers and nitrification inhibitors may be provided at different points in time. For example, the fertilizer may be fertigated first, followed by the nitrification inhibitor, or preferably, the nitrification inhibitor may be fertigated first, followed by the fertilizer. The time intervals for these activities follow the herein above outlined time intervals for the application of fertilizers and nitrification inhibitors. Also envisaged is a repeated fertigation of fertilizers and nitrification inhibitors according to the present invention, either together or intermittently, e.g. every 2 hours, 6 hours, 12 hours, 24 hours, 2 days, 3 days, 4 days, 5 days, 6 days or more.

### Experimental

### NI application

Fertilizer granules are added to rotating disk mixer. While mixing, nitrification inhibitor formulation is sprayed onto the fertilizer using a syringe. After 3 minutes mixing time, the fertilizer is removed from the mixer.

### Anti-caking agent application

Anti-caking agent is heated to above its melting point. Fertilizer granules are heated to the same temperature as the anti-caking agent and added to a rotating disk mixer. Under continuous mixing, 0.1 wt% anti-caking agent is applied to the fertilizer using a syringe. After 3 minutes mixing time, the fertilizer is removed from the mixer.

### Caking test

Two metal cylinders, diameter 55 mm, are placed on top of each other and the resulting cylinder is filled with 170 gram fertilizer. The fertilizer in the cylinder is put under 2.0 bar pressure for 24 hours at 30°C and 40% relative humidity. Afterwards, the cylinder is depressurized and the force needed to break the granules apart is measured. Higher force needed indicates more caking.

### Fertilizer water content measurement

10 g fertilizer is weighed out in a petri dish and placed in an oven at 80°C for 4 hours. Afterwards the fertilizer is weighed back. The moisture content is calculated from the difference in fertilizer weight before and after drying.

| **Material** | **Composition** | **Commercial name** |
|---|---|---|
| Anticaking agent A | Mineral oil with 10-25% surfactants and 5-10% alkylamine | |
| Anticaking agent B | Polyethylene wax | |
| Anticaking agent C | Petroleum wax + alkylamine (CAS 90640-32-7) | |
| Anticaking agent D | Petroleum wax + alkylamine (CAS 90640-32-7) + alkylamine/alkyl fatty acid mixture (CAS 1428547-35-6) | |
| Nitrification inhibitor | DMPP formulation | Vibelsol |
| ASN | ASN without anti-caking treatment | |

### Examples

| | |
|---|---|
| M1 | ASN was treated with 0.5 wt% Vibelsol formulation |
| M2 | ASN was treated with 0.1 wt% Anticaking agent A, followed by treatment with 0.5 wt% Vibelsol formulation |
| M3 | ASN was treated with 0.1 wt% Anticaking agent B, followed by treatment with 0.5 wt% Vibelsol formulation |
| M4 | ASN was treated with 0.1 wt% Anticaking agent C, followed by treatment with 0.5 wt% Vibelsol formulation |
| M5 | ASN was treated with 0.1 wt% Anticaking agent D, followed by treatment with 0.5 wt% Vibelsol formulation |

### Caking test

| **Product** | **Water content** | **Caking** | | |
|---|---|---|---|---|
| | **(wt%)** | **Average (N)** | **Standard deviation** | **%** |
| M1 | 0.54 | 167 | 6 | 3 |
| M2 | 0.52 | 191 | 21 | 11 |
| M3 | 0.49 | 156 | 5 | 3 |
| M4 | 0.36 | 146 | 18 | 13 |
| M5 | 0.53 | 65 | 14 | 22 |

The caking test results show that only anti-caking agent D, containing a mixture of alkylamine and alkyl fatty acid, is able to reduce caking of Vibelsol treated ASN.

## Claims

1. A mixture comprising:
a) at least one nitrogen-containing fertilizer (A), and
b) at least one nitrification inhibitor (B) selected from the group consisting of 3,4-dimethyl-1*H*-pyrazole (DMP), 3,4-dimethyl-1*H*-pyrazole phosphate (DMPP), 2-(3,4-dimethyl-1*H-*pyrazol-1-yl)succinic acid (DMPSA1), 2-(4,5-dimethyl-1*H*-pyrazol-1-yl)succinic acid (DMPSA2), and salts thereof, and
c) a composition (C) comprising primary and/or secondary alkyl and/or alkylene monoamines and further
2 to 8 wt.-% of aluminium stearate, based on the total weight of composition (C), and/or
2 to 8 wt.-% fatty alcohol based on the total weight of composition (C).

2. A mixture according to claim 1, wherein the nitrogen-containing fertilizer (A) is an ammonium-containing fertilizer.

3. A mixture according to claim 1, wherein the nitrogen-containing fertilizer (A) is selected from the group consisting of ammonium nitrate, calcium ammonium nitrate, ammonium sulfate, ammonium chloride, ammonium carbonate, ammonium sulfate nitrate, diammonium phosphate, monoammonium phosphate, ammonium thiosulfate, and urea.

4. A mixture according to claim 1, wherein the nitrogen-containing fertilizer (A) is ammonium sulfate nitrate.

5. A mixture according to any of the claims 1 to 4, wherein the nitrification inhibitor (B) is 3,4-dimethyl-1*H*-pyrazole phosphate (DMPP).

6. A mixture according to any of the claims 1 to 5, wherein the composition (C) comprises 1 to 40 wt.-% of an amine mixture of primary and/or secondary alkyl and/or alkylene monoamines based on the total weight of composition (C).

7. A mixture according to any of the claims 1 to 5, wherein the composition (C) comprises 1 to 40 wt.-% of an amine mixture of primary and/or secondary alkyl and/or alkylene monoamines based on the total weight of composition (C), and wherein the ratio of secondary alkyl and/or alkylene monoamines is from 25 to 75 wt.-% based on the total weight of alkyl and/or alkylene monoamines.

8. A mixture according to any of the claims 1 to 7, wherein the primary and/or secondary alkyl and/or alkylene monoamines are amines having alkyl and/or alkylene chains containing a number of carbons from 14 to 20.

9. A mixture according to any of the claims 1 to 8, wherein the composition (C) comprises 1 to 40 wt.-% of an amine mixture of primary and/or secondary alkyl and/or alkylene monoamines and 1 to 40 wt.-% of a fatty acid based on the total weight of composition (C).

10. A mixture according to any of the claims 1 to 9, wherein the composition (C) comprises 1 to 40 wt.-% of an amine mixture of primary and/or secondary alkyl and/or alkylene monoamines and 1 to 40 wt.-% of a fatty acid based on the total weight of composition (C), and wherein the primary and/or secondary alkyl and/or alkylene monoamines are amines having alkyl and/or alkylene chains containing a number of 14 to 20, and wherein the fatty acids have alkyl and/or alkylene chains containing a number of carbons from 14 to 18.

11. A mixture according to any of the claims 1 to 10, wherein the fatty alcohol is octadecyl alcohol.

12. A method of obtaining a mixture according to any one of claims 1 to 11, wherein the fertilizer mixture comprising
a) at least one nitrogen-containing fertilizer (A), and
b) at least one nitrification inhibitor (B) selected from the group consisting of 3,4-dimethyl-1*H*-pyrazole (DMP), 3,4-dimethyl-1*H*-pyrazole phosphate (DMPP), 2-(3,4-dimethyl-1*H-*pyrazol-1-yl)succinic acid (DMPSA1), 2-(4,5-dimethyl-1*H*-pyrazol-1-yl)succinic acid (DMPSA2), and salts thereof,
is treated with a composition (C) comprising primary and/or secondary alkyl and/or alkylene monoamines and further
2 to 8 wt.-% of aluminium stearate, based on the total weight of composition (C), and/or
2 to 8 wt.-% fatty alcohol based on the total weight of composition (C),
in the proportion of 0.1 kg per ton to 5 kg per ton.

13. Use of a composition (C) comprising primary and/or secondary alkyl and/or alkylene monoamines and further
2 to 8 wt.-% of aluminium stearate, based on the total weight of composition (C), and/or
2 to 8 wt.-% fatty alcohol based on the total weight of composition (C),
for the anti-caking or dust-preventing treatment of a fertilizer mixture comprising
a) at least one nitrogen-containing fertilizer (A), and
b) at least one nitrification inhibitor (B) selected from the group consisting of 3,4-dimethyl-1*H*-pyrazole (DMP), 3,4-dimethyl-1*H*-pyrazole phosphate (DMPP), 2-(3,4-dimethyl-1*H*-pyrazol-1-yl)succinic acid (DMPSA1), 2-(4, S-dimethyl-1*H*-pyrazol-1-yl)succi nic acid (DMPSA2), and salts thereof.

## Patentansprüche

1. Mischung, umfassend:
a) mindestens ein stickstoffhaltiges Düngemittel (A) und
b) mindestens einen Nitrifikationsinhibitor (B) ausgewählt aus der Gruppe bestehend aus 3,4-Dimethyl-1*H-*pyrazol (DMP), 3,4-Dimethyl-1*H*-pyrazolphosphat (DMPP), 2-(3,4-Dimethyl-1*H*-pyrazol-1-yl)bernsteinsäure (DMPSA1), 2-(4,5-Dimethyl-1H-pyrazol-1-yl)bernsteinsäure (DMPSA2) und Salzen davon und
c) eine Zusammensetzung (C), umfassend primäre und/oder sekundäre Alkyl- und/oder Alkylenmonoamine und ferner
2 bis 8 Gew.-% Aluminiumstearat, bezogen auf das Gesamtgewicht von Zusammensetzung (C), und/oder
2 bis 8 Gew.-% Fettalkohol, bezogen auf das Gesamtgewicht von Zusammensetzung (C).

2. Mischung nach Anspruch 1, wobei es sich bei dem stickstoffhaltigen Düngemittel (A) um ein ammoniumhaltiges Düngemittel handelt.

3. Mischung nach Anspruch 1, wobei das stickstoffhaltige Düngemittel (A) aus der aus Ammoniumnitrat, Calciumammoniumnitrat, Ammoniumsulfat, Ammoniumchlorid, Ammoniumcarbonat, Ammoniumsulfatnitrat, Diammoniumphosphat, Monoammoniumphosphat, Ammoniumthiosulfat und Harnstoff bestehenden Gruppe ausgewählt ist.

4. Mischung nach Anspruch 1, wobei es sich bei dem stickstoffhaltigen Düngemittel (A) um Ammoniumsulfatnitrat handelt.

5. Mischung nach einem der Ansprüche 1 bis 4, wobei es sich bei dem Nitrifikationsinhibitor (B) um 3,4-Dimethyl-1H-pyrazolphosphat (DMPP) handelt.

6. Mischung nach einem der Ansprüche 1 bis 5, wobei die Zusammensetzung (C) 1 bis 40 Gew.-% einer Aminmischung von primären und/oder sekundären Alkyl- und/oder Alkylenmonoaminen, bezogen auf das Gesamtgewicht von Zusammensetzung (C), umfasst.

7. Mischung nach einem der Ansprüche 1 bis 5, wobei die Zusammensetzung (C) 1 bis 40 Gew.-% einer Aminmischung von primären und/oder sekundären Alkyl- und/oder Alkylenmonoaminen, bezogen auf das Gesamtgewicht von Zusammensetzung (C), umfasst und wobei der Anteil von sekundären Alkyl- und/oder Alkylenmonoaminen 25 bis 75 Gew.-%, bezogen auf das Gesamtgewicht von Alkyl- und/oder Alkylenmonoaminen, beträgt.

8. Mischung nach einem der Ansprüche 1 bis 7, wobei es sich bei den primären und/oder sekundären Alkyl- und/oder Alkylenmonoaminen um Amine mit Alkyl- und/oder Alkylenketten mit 14 bis 20 Kohlenstoffatomen handelt.

9. Mischung nach einem der Ansprüche 1 bis 8, wobei die Zusammensetzung (C) 1 bis 40 Gew.-% einer Aminmischung von primären und/oder sekundären Alkyl- und/oder Alkylenmonoaminen und 1 bis 40 Gew.-% einer Fettsäure, bezogen auf das Gesamtgewicht von Zusammensetzung (C), umfasst.

10. Mischung nach einem der Ansprüche 1 bis 9, wobei die Zusammensetzung (C) 1 bis 40 Gew.-% einer Aminmischung von primären und/oder sekundären Alkyl- und/oder Alkylenmonoaminen und 1 bis 40 Gew.-% einer Fettsäure, bezogen auf das Gesamtgewicht von Zusammensetzung (C), umfasst und wobei es sich bei den primären und/oder sekundären Alkyl- und/oder Alkylenmonoaminen um Amine mit Alkyl- und/oder Alkylenketten mit 14 bis 20 handelt und wobei die Fettsäuren Alkyl- und/oder Alkylenketten mit 14 bis 18 Kohlenstoffatomen aufweisen.

11. Mischung nach einem der Ansprüche 1 bis 10, wobei es sich bei dem Fettalkohol um Octadecylalkohol handelt.

12. Verfahren zur Herstellung einer Mischung nach einem der Ansprüche 1 bis 11, wobei die Düngemittelmischung, die
a) mindestens ein stickstoffhaltiges Düngemittel (A) und
b) mindestens einen Nitrifikationsinhibitor (B) ausgewählt aus der Gruppe bestehend aus 3,4-Dimethyl-1*H-*pyrazol (DMP), 3,4-Dimethyl-1*H*-pyrazolphosphat (DMPP), 2-(3,4-Dimethyl-1*H*-pyrazol-1-yl)bernsteinsäure (DMPSA1), 2-(4,5-Dimethyl-1*H*-pyrazol-1-yl)bernsteinsäure (DMPSA2) und Salzen davon,
umfasst, mit einer Zusammensetzung (C), umfassend primäre und/oder sekundäre Alkyl- und/oder Alkylenmonoamine und ferner
2 bis 8 Gew.-% Aluminiumstearat, bezogen auf das Gesamtgewicht von Zusammensetzung (C), und/oder
2 bis 8 Gew.-% Fettalkohol, bezogen auf das Gesamtgewicht von Zusammensetzung (C),
im Verhältnis von 0,1 kg pro Tonne bis 5 kg pro Tonne behandelt wird.

13. Verwendung einer Zusammensetzung (C), umfassend primäre und/oder sekundäre Alkyl- und/oder Alkylenmonoamine und ferner
2 bis 8 Gew.-% Aluminiumstearat, bezogen auf das Gesamtgewicht von Zusammensetzung (C), und/oder
2 bis 8 Gew.-% Fettalkohol, bezogen auf das Gesamtgewicht von Zusammensetzung (C),
zur Antiback- oder Staubverhinderungsbehandlung einer Düngemittelmischung, umfassend
a) mindestens ein stickstoffhaltiges Düngemittel (A) und
b) mindestens einen Nitrifikationsinhibitor (B) ausgewählt aus der Gruppe bestehend aus 3,4-Dimethyl-1*H-*pyrazol (DMP), 3,4-Dimethyl-1*H*-pyrazolphosphat (DMPP), 2-(3,4-Dimethyl-1*H*-pyrazol-1-yl)bernsteinsäure (DMPSA1), 2-(4,5-Dimethyl-1*H*-pyrazol-1-yl)bernsteinsäure (DMPSA2) und Salzen davon.

## Revendications

1. Mélange comprenant :
a) au moins un engrais contenant de l'azote (A), et
b) au moins un inhibiteur de nitrification (B) sélectionné dans le groupe constitué par 3,4-diméthyl-1*H*-pyrazole (DMP), phosphate de 3,4-diméthyl-1*H*-pyrazole (DMPP), acide 2-(3,4-diméthyl-1*H*-pyrazol-1-yl)succinique (DMPSA1), acide 2-(4,5-diméthyl-1*H*-pyrazol-1-yl)succinique (DMPSA2), et des sels correspondants, et
c) une composition (C) comprenant des alkyle et/ou alkylène monoamines primaires et/ou secondaires et en outre
2 à 8 % en poids de stéarate d'aluminium, sur la base du poids total de la composition (C), et/ou
2 à 8 % en poids d'alcool gras sur la base du poids total de la composition (C).

2. Mélange selon la revendication 1, dans lequel l'engrais contenant de l'azote (A) est un engrais contenant ammonium.

3. Mélange selon la revendication 1, dans lequel l'engrais contenant de l'azote (A) est sélectionné dans le groupe constitué par le nitrate d'ammonium, le nitrate d'ammonium calcique, le sulfate d'ammonium, le chlorure d'ammonium, le carbonate d'ammonium, le nitrate de sulfate d'ammonium, le phosphate diammonique, le phosphate monoammonique, le thiosulfate d'ammonium et l'urée.

4. Mélange selon la revendication 1, dans lequel l'engrais contenant de l'azote (A) est le nitrate de sulfate d'ammonium.

5. Mélange selon l'une quelconque des revendications 1 à 4, dans lequel l'inhibiteur de nitrification (B) est le phosphate de 3,4-diméthyl-1H-pyrazole (DMPP).

6. Mélange selon l'une quelconque des revendications 1 à 5, dans lequel la composition (C) comprend 1 à 40 % en poids d'un mélange d'amines d'alkyle et/ou alkylène monoamines primaires et/ou secondaires sur la base du poids total de la composition (C).

7. Mélange selon l'une quelconque des revendications 1 à 5, dans lequel la composition (C) comprend 1 à 40 % en poids d'un mélange d'amines d'alkyle et/ou alkylène monoamines primaires et/ou secondaires sur la base du poids total de la composition (C), et dans lequel le rapport d'alkyle et/ou alkylène monoamines secondaires est compris entre 25 et 75 % en poids, sur la base du poids total des alkyle et/ou alkylène monoamines.

8. Mélange selon l'une quelconque des revendications 1 à 7, dans lequel les alkyle et/ou alkylène monoamines primaires et/ou secondaires sont des amines ayant des chaînes alkyle et/ou alkylène contenant un nombre de carbones de 14 à 20.

9. Mélange selon l'une quelconque des revendications 1 à 8, dans lequel la composition (C) comprend 1 à 40 % en poids d'un mélange d'amines d'alkyle et/ou alkylène monoamines primaires et/ou secondaires et 1 à 40 % en poids d'un acide gras sur la base du poids total de la composition (C).

10. Mélange selon l'une quelconque des revendications 1 à 9, dans lequel la composition (C) comprend 1 à 40 % en poids d'un mélange d'amines d'alkyle et/ou alkylène monoamines primaires et/ou secondaires et 1 à 40 % en poids d'un acide gras sur la base du poids total de la composition (C), et dans lequel les alkyle et/ou alkylène monoamines primaires et/ou secondaires sont des amines ayant des chaînes alkyle et/ou alkylène contenant un nombre de 14 à 20, et dans lequel les acides gras ont des chaînes alkyle et/ou alkylène contenant un nombre de carbones de 14 à 18.

11. Mélange selon l'une quelconque des revendications 1 à 10, dans lequel l'alcool gras est l'alcool octadécylique.

12. Procédé d'obtention d'un mélange selon l'une quelconque des revendications 1 à 11, dans lequel le mélange d'engrais comprend
a) au moins un engrais contenant de l'azote (A), et
b) au moins un inhibiteur de nitrification (B) sélectionné dans le groupe constitué par 3,4-diméthyl-1H-pyrazole (DMP), phosphate de 3,4-diméthyl-1H-pyrazole (DMPP), acide 2-(3,4-diméthyl-1H-pyrazol-1-yl)succinique (DMPSA1), acide 2-(4,5-diméthyl-1H-pyrazol-1-yl)succinique (DMPSA2), et des sels correspondants,
est traité avec une composition (C) comprenant des alkyle et/ou alkylène monoamines primaires et/ou secondaires et en outre
2 à 8 % en poids de stéarate d'aluminium, sur la base du poids total de la composition (C), et/ou
2 à 8 % en poids d'alcool gras sur la base du poids total de la composition (C),
dans la proportion de 0,1 kg par tonne à 5 kg par tonne.

13. Utilisation d'une composition (C) comprenant des alkyle et/ou alkylène monoamines primaires et/ou secondaires et en outre
2 à 8 % en poids de stéarate d'aluminium, sur la base du poids total de la composition (C), et/ou
2 à 8 % en poids d'alcool gras sur la base du poids total de la composition (C),
pour le traitement anti-agglomérant ou de prévention de la poussière d'un mélange d'engrais comprenant
a) au moins un engrais contenant de l'azote (A), et
b) au moins un inhibiteur de nitrification (B) sélectionné dans le groupe constitué par 3,4-diméthyl-1H-pyrazole (DMP), phosphate de 3,4-diméthyl-1H-pyrazole (DMPP), acide 2-(3,4-diméthyl-1H-pyrazol-1-yl)succinique (DMPSA1), acide 2-(4,5-diméthyl-1*H*-pyrazol-1-yl)succinique (DMPSA2), et des sels correspondants.
